# FASCICULE DE BREVET EUROPEEN

(11) **EP 4 187 667 B1**
(45) Date de publication et mention de la délivrance du brevet: **16.10.2024**
(21) Numéro de dépôt: 22208599.5
(22) Date de dépôt: 21.11.2022
(51) Int. Cl.: H01M 10/42, H01M 10/052, H01M 10/0562, H01M 10/0565, H01M 10/48, H01M 50/691

(54) **PROCÉDÉ DE RÉALISATION D'UNE BATTERIE TOUT-SOLIDE À PARTIR D'UN ACCUMULATEUR ÉLECTROCHIMIQUE MÉTAL-ION À ÉLECTROLYTE LIQUIDE, À DES FINS D'ESSAIS ABUSIFS THERMIQUES**
VERFAHREN ZUR HERSTELLUNG EINER FESTKÖRPERBATTERIE AUS EINEM ELEKTROCHEMISCHEN FLÜSSIGELEKTROLYT-METALL-IONEN-AKKUMULATOR FÜR THERMISCHE MISSBRAUCHSTESTS
METHOD FOR PRODUCING AN ALL-SOLID-STATE BATTERY FROM A LIQUID ELECTROLYTE METAL-ION ELECTROCHEMICAL BATTERY FOR THERMAL ABUSE TESTING

(30) Priorité: 25.11.2021 FR 2112542
(43) Date de publication de la demande: 31.05.2023
(73) Titulaire: Commissariat à l'énergie atomique et aux énergies alternatives, 75015 Paris (FR)
(72) Inventeur: VINCENT, Rémi, 38054 GRENOBLE CEDEX 09 (FR); CHARBONNEL, Juliette, 38054 GRENOBLE CEDEX 09 (FR); DEILHES, Claire, 38054 GRENOBLE CEDEX 09 (FR); VINCENS, Christophe, 38054 GRENOBLE CEDEX 09 (FR)
(74) Mandataire: Cabinet Nony

(56) Documents cités:
- WO-A1-2021/212428
- KR-A- 20160 085 467

## Description

### Domaine technique

La présente invention concerne le domaine des accumulateurs électrochimiques, et plus particulièrement à des accumulateurs métal-ion à électrolyte solide, aussi désignés ci-après batteries tout-solide.

Plus particulièrement, l'invention a trait à la réalisation d'une batterie tout-solide, à des fins d'essais abusifs thermiques.

Bien que décrite en référence à un accumulateur Lithium-ion, l'invention s'applique à tout accumulateur électrochimique métal-ion, c'est-à-dire également Sodium-ion, Magnésiumion, Aluminium-ion...ou de manière plus générale à tout accumulateur électrochimique. L'invention s'applique à toute chimie d'accumulateurs métal-ion, comme NMC/Graphite, NCA/Graphite, NMC/G-Si, LFP/ Graphite, Na-ion avec électrolyte liquide ou électrolyte dit solide.

### Technique antérieure

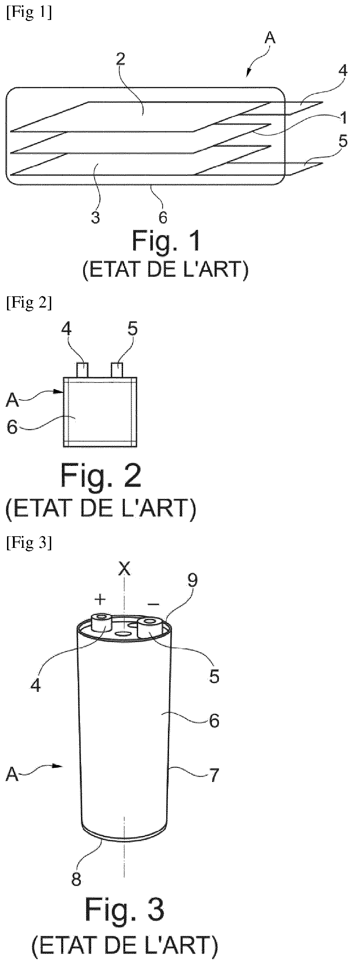

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733 ou WO 2021/212428;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte liquide est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNiₓMn_{y}Co_{z}C₂ avec x+y+z = 1, tel que LiNi_{0.33}Mn_{0.33}Co_{0.33}O₂, ou un matériau à base de type oxyde de nickel cobalt aluminium LiNiₓCo_{y}Al_{z}O₂ avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en oeuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme l'acrylonitrile butadiène styrène (ABS).

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à 10⁻⁶ mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique. Des formes prismatiques de boitiers ont également déjà été réalisées.

Un des types de boitier rigide de forme cylindrique, usuellement fabriqué pour un accumulateur Li-ion de forte capacité et à durée de vie supérieure à 10 ans, est illustré en figure 3.

Le boîtier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

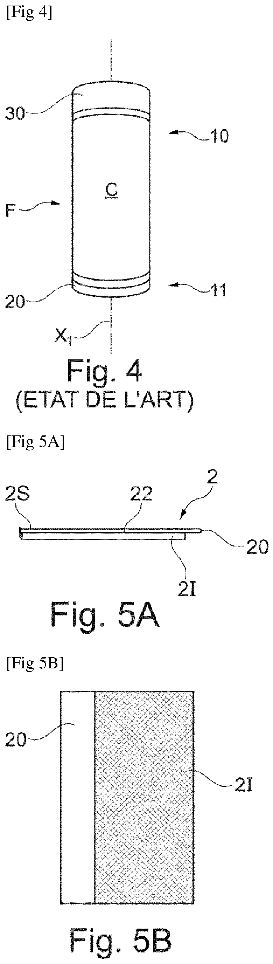

On a reproduit à la figure 4 la photographie d'un faisceau électrochimique F de forme allongée selon un axe longitudinal X1 et comportant une seule cellule électrochimique C telle qu'elle est usuellement enroulée par bobinage avant les étapes de logement dans un boitier, de raccordement électrique aux bornes de sortie de l'accumulateur et son imprégnation par un électrolyte. La cellule C est constituée d'une anode 3 et d'une cathode 4 de part et d'autre d'un séparateur (non visible) adapté pour être imprégné de l'électrolyte. Comme cela est visible, l'une 10 de ses extrémités latérales du faisceau F est délimitée par la bande 30 de l'anode 3 non revêtue, tandis que l'autre 11 de ses extrémités latérales est délimitée par la bande 20 de la cathode 2 non revêtue.

Par « bande non revêtue » ou « rive », on entend ici et dans le cadre de l'invention, une portion latérale d'une feuille métallique, aussi appelée feuillards, formant un collecteur de courant, qui n'est pas recouverte d'un matériau d'insertion aux ions métal, tel que le lithium dans le cas d'un accumulateur Li-ion.

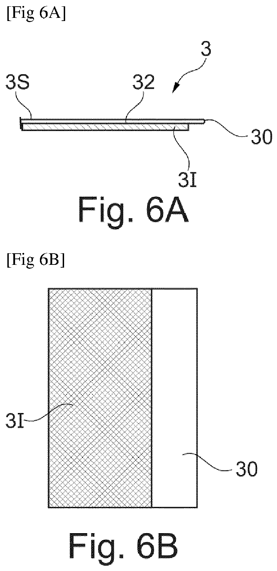

On a représenté plus en détail, respectivement en figures 5A et 5B et en figures 6A et 6B, une électrode positive ou cathode 2 et une électrode négative ou anode 3 à partir desquelles un faisceau électrochimique actuel est réalisé par bobinage avec un séparateur 4 intercalé entre cathode 2 et anode 3. La cathode 2 est constituée d'un substrat 2S formé d'un feuillard métallique qui supporte dans sa portion centrale 22, un matériau actif d'insertion au lithium 2I, tandis que sa bande latérale (rive) 20 est dépourvue de matériau actif d'insertion. De même, l'anode 3 est constituée d'un substrat 2S formé d'un feuillard métallique qui supporte dans sa portion centrale 32, un matériau actif d'insertion au lithium 3I, et sa rive 30 est dépourvue de matériau actif d'insertion. Chaque feuillard métallique 2S, 3S est réalisé en un seul tenant, c'est-à-dire caractéristiques géométriques et métallurgiques sur toute sa surface.

A partir d'un faisceau électrochimique tel qu'illustré à la figure 4, on réalise généralement un tassage axial des feuillards d'électrodes au niveau de leurs rives 20 30.

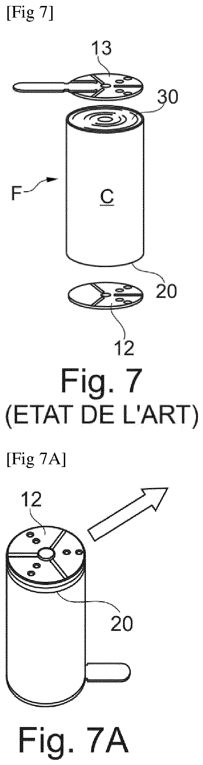

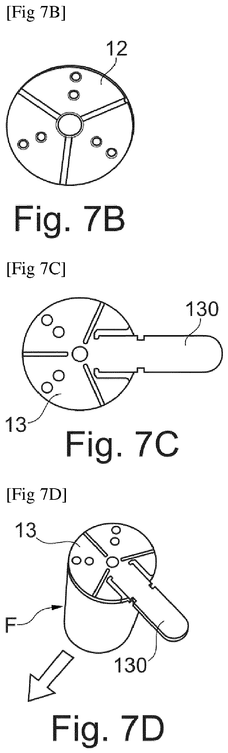

Une fois le tassage réalisé, on soude l'une des extrémités latérales 11 du faisceau F, de préférence, avec un collecteur de courant 12 usuel sous la forme d'un disque plein métallique, lui-même destiné à être soudé par la suite avec le fond 8 du boitier 6 d'accumulateur (figures 7, 7A, 7B).

On procède de la même manière entre l'autre des extrémités latérales 10 du faisceau, et une partie de collecteur de courant 13 usuel sous la forme d'un disque plein métallique, percé en son centre et d'une languette 130 faisant saillie latéralement du disque 13 (figures 7, 7C, 7D).

Pour finaliser la réalisation définitive de l'accumulateur, on procède usuellement comme suit.

On introduit le faisceau avec le collecteur 13 dans un récipient rigide en aluminium formant uniquement l'enveloppe latérale 7 du boitier 6. Lors de cette étape, pour que la languette 130 ne gêne pas l'introduction, on replie celle-ci vers le haut.

On soude le collecteur 12 avec le fond 8 du boitier 6.

On soude le collecteur 13 à un pôle négatif 50 formant une traversée d'un couvercle 9 de boitier 6.

On soude alors le couvercle 9 au récipient rigide métallique 7.

Puis on effectue une étape de remplissage du boitier 6 à l'aide d'un électrolyte liquide, au travers d'une ouverture débouchante non représentée qui est pratiquée dans le couvercle 9.

La réalisation de l'accumulateur Li-ion selon l'invention prend fin par le bouchage de l'ouverture de remplissage.

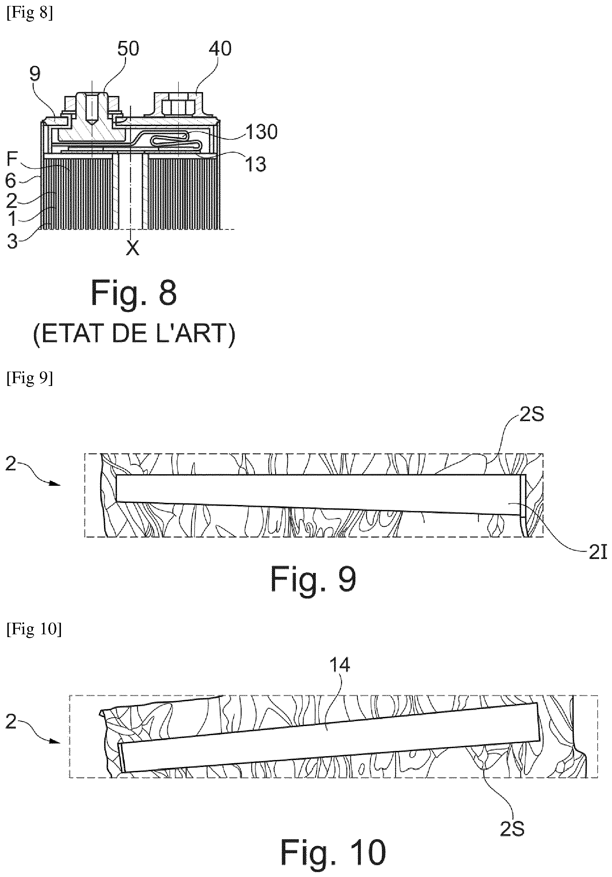

Un exemple d'accumulateur Li-ion finalisé est montré à la figure 8 : une des bornes de sortie 50, en général la borne négative, traverse le boîtier 6 de manière isolée électriquement et est raccordée électriquement à une électrode de même polarité du faisceau électrochimique F au moyen du collecteur de courant 13, dont la languette plane 130 est repliée sur elle-même. L'autre des bornes de sortie 40, en général la borne positive , est quant à elle soudée au couvercle 9 du boîtier 6 lui-même raccordé électriquement à l'électrode du faisceau électrochimique F de polarité opposée à celle de la borne 50.

Un accumulateur électrochimique doit fonctionner dans une plage de température définie, typiquement généralement inférieure à 70°C à sa surface extérieure de boitier, sous peine de dégrader ses performances, voire de le dégrader physiquement jusqu'à destruction.

On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques.

Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «Thermal Runaway»).

Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Par ailleurs, les fabricants de batterie ont deux objectifs majeurs : augmenter constamment la densité énergétique de leurs batteries afin d'en améliorer les performances et améliorer la sécurité de leurs batteries.

Ainsi, l'utilisation de matériaux à haute capacité énergétique mais avec un comportement fortement exothermique en cas d'emballement thermique d'un accumulateur est de plus en plus courante : [1]. En ce qui concerne le phénomène d'emballement thermique, on se reportera à la publication [1] et au protocole décrit dans cette publication. Les températures dites « d'auto-échauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

D'après la littérature, comme la publication [2], l'utilisation de batteries tout-solide permettrait, d'accroître la densité énergétique tout en supprimant les éléments qui seraient la cause des emballements thermiques, à savoir les solvants organiques de l'électrolyte liquide et les polymères du séparateur, susceptibles de s'enflammer ou fuiter et donc d'améliorer leur sécurité.

A ce jour, plusieurs solutions d'essais dits abusifs mécanique, électrique, thermique existent pour contraindre un accumulateur lithium-ion à électrolyte liquide à un emballement thermique, et consistent en substance soit à réaliser une surcharge électrique, soit à mettre en oeuvre un court-circuit externe, soit à faire un poinçonnement ou une surchauffe externe de l'accumulateur.

En revanche, la technologie des batteries tout-solide n'étant pas mature, aucun essai abusif n'a été réalisé à l'échelle d'une batterie tout-solide pour vérifier l'hypothèse précitée de la littérature sur l'amélioration qu'une batterie tout-solide apporterait sur la sécurité d'un point de vue thermique.

Il existe un besoin d'une solution qui permette de réaliser des essais abusifs à l'échelle d'une batterie tout-solide afin de valider celle-ci.

Le but général de l'invention est alors de répondre au moins en partie à ce besoin.

### Exposé de l'invention

Pour ce faire, l'invention a tout d'abord pour objet un procédé de réalisation d'une batterie tout-solide comprenant les étapes suivantes :
a/ réalisation d'un accumulateur électrochimique métal-ion comprenant un faisceau électrochimique comportant au moins une cellule électrochimique constituée d'une cathode et d'une anode de part et d'autre d'un séparateur imprégné d'un électrolyte liquide, la cathode et l'anode comprenant chacune un substrat, formé d'un feuillard métallique qui supporte dans sa portion centrale un matériau actif d'insertion d'ion métal, et un emballage agencé pour contenir le faisceau électrochimique avec étanchéité ;
b/ charge électrique de l'accumulateur de sorte à ce qu'il atteigne un état de charge électrique prédéterminé ;
c/ perçage de l'emballage ;
d/ enlèvement de l'électrolyte liquide ;
e/ ouverture de l'emballage ;
f/ séparation de l'anode, cathode et du séparateur les uns des autres ;
g/ dépôt par enduction d'au moins une couche d'encre formant un électrolyte tout-solide, sur l'électrode parmi l'anode ou la cathode, qui est chargée électriquement à l'état prédéterminé ;
h/ réalisation d'un faisceau électrochimique comportant au moins une cellule électrochimique constituée de la cathode et de l'anode séparées selon l'étape f/ et dont l'une est revêtue de la couche électrolyte tout-solide déposée selon l'étape g/.

Selon un mode de réalisation avantageux, le procédé comprend une étape i/ mise en place d'un emballage agencé pour contenir le faisceau électrochimique (F') avec étanchéité. Cette étape i/ permet de représenter un accumulateur en conditions réelles d'utilisation.

L'état de charge prédéterminé selon l'étape b/ est avantageusement compris entre 30 et 100%, de préférence entre 85 et 100%, de préférence encore de 100%.

Selon une configuration avantageuse, les faisceaux électrochimiques sont chacun constitué d'une seule cellule électrochimique enroulée sur elle-même par bobinage.

De préférence, l'étape d/ est réalisée par évaporation sous vide.

De préférence encore, l'évaporation sous vide est réalisée à au moins 70°C pendant une durée d'au moins 24 heures.

Selon une variante avantageuse de réalisation, l'étape g/ d'enduction est réalisée au moyen d'une racle d'enduction fixe au-dessus de l'électrode à enduire tirée à vitesse sensiblement constante.

Avantageusement, l'étape g/ d'enduction est réalisée de sorte à ce que l'épaisseur de la couche d'électrolyte tout-solide sur l'électrode est comprise entre 10 et 20µm.

Selon un autre mode de réalisation avantageux, le procédé comprend, entre l'étape f/ et l'étape g/, une étape f1/ de nettoyage de l'anode et de la cathode avec du carbonate de diméthyle (DMC).

Dans la configuration où les emballages sont des boitiers, les étapes a/ et i/ comprennent le sertissage d'un couvercle de boitier.

Avantageusement, le matériau de l'encre formant l'électrolyte tout-solide, déposée selon l'étape g/, est choisi parmi les polymères, les oxydes et les sulfures ou un mélange de ceux-ci.

Avantageusement encore, le matériau de l'encre estt choisi parmi le poly(oxyéthylène) (POE), une céramique de type Li₇La₃Zr₂O₁₂ (LLZO).

L'invention a également pour objet un procédé d'essais abusifs thermiques d'une batterie tout-solide réalisée selon le procédé décrit précédemment.

Pour une application Li-ion, l'accumulateur est un accumulateur Li-ion dans lequel:
- le matériau d'électrode(s) négative(s) est choisi dans le groupe comportant le graphite, le lithium, l'oxyde de titanate Li₄TiO₅O₁₂;
- le matériau d'électrode(s) positive(s) est choisi dans le groupe comportant LiFePO₄, LiCoO₂, LiNi_{0.33}Mn_{0.33}Co_{0.33}O₂, LiNi_{0.6}Co_{0.2}Mn_{0.2}O₂, LiNi_{0.8}Mn_{0.1}Co_{0.1}O₂, NiCoAl.

Ainsi, l'invention consiste essentiellement à réaliser une batterie tout-solide directement à partir d'un accumulateur métal-ion à électrolyte liquide complètement réalisé et qui présente un état de charge électrique prédéterminé, de préférence égal à 100%.

Après avoir complètement enlevé l'électrolyte liquide, ouvert l'accumulateur et séparer les uns des autres les électrodes et le séparateur constituant la cellule électrochimique de l'accumulateur, on dépose par enduction directement sur l'électrode chargée électriquement à l'état prédéterminé, une couche d'encre dont le matériau est celui d'un électrolyte tout-solide.

Après avoir reconstitué un faisceau électrochimique « tout-solide » à partir de l'électrode enduite et de l'autre électrode séparée, on procède à la mise en place de son emballage et on obtient au final un accumulateur tout-solide dont l'électrochimie est active bien que performante du fait d'une résistance interne très importante.

L'avantage primordial d'une batterie tout-solide obtenue grâce au procédé selon l'invention est que suite à un essai abusif thermique, par exemple selon la norme [3] avec une rampe de température de 5 à 20°C/min, ladite batterie se comporte en emballement thermique comme une batterie tout solide réelle.

Une batterie tout-solide obtenue selon l'invention peut être de géométrie cylindrique ou prismatique ou à empilement.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion à électrolyte liquide avec son emballage souple selon l'état de l'art.
[Fig 3] la figure 3 est une vue en perspective d'un accumulateur lithium-ion à électrolyte liquide selon l'état de l'art avec son emballage rigide constitué d'un boitier.
[Fig 4] la figure 4 est une vue photographique en perspective d'un faisceau électrochimique d'un accumulateur lithium-ion à électrolyte liquide, le faisceau étant constitué d'une seule cellule électrochimique enroulée sur elle-même par bobinage.
[Fig 5A] [Fig 5B] les figures 5A et 5B sont des vues respectivement de côté et de dessus d'une électrode positive du faisceau électrochimique selon la figure 4.
[Fig 6A] [Fig 6B] les figures 6A et 6B sont des vues respectivement de côté et de dessus d'une électrode négative du faisceau électrochimique selon la figure 4.
[Fig 7] [Fig 7A] [Fig 7B] [Fig 7C] [Fig 7D] les figures 7 et 7A à 7D sont des vues en perspective et de dessus de chacun des deux collecteurs de courant soudé à l'une des extrémités latérales d'un faisceau électrochimique selon l'état de l'art.
[Fig 8] la figure 8 est une vue en coupe axiale d'une partie d'un accumulateur lithium-ion à électrolyte liquide selon l'état de l'art.
[Fig 9] la figure 9 est une reproduction photographique d'une électrode chargée électriquement à 100% issue d'un accumulateur Li-ion tel que celui de la figure 8 duquel l'électrolyte liquide a préalablement été enlevé.
[Fig 10] la figure 10 est une reproduction photographique de l'électrode selon la figure 9 revêtue d'une couche d'encre d'un électrolyte tout solide.
[Fig 11] la figure 11 est une vue photographique en perspective d'un faisceau électrochimique d'une batterie Li-ion tout-solide selon l'invention, le faisceau étant constitué d'une seule cellule électrochimique enroulée sur elle-même par bobinage.

### Description détaillée

Par souci de clarté, les mêmes références désignant les mêmes éléments d'un accumulateur au lithium-ion à électrolyte liquide selon l'état de l'art et une batterie tout-solide selon l'invention sont utilisées pour toutes les figures 1 à 11.

On précise que les différents éléments selon l'invention sont représentés uniquement par souci de clarté et qu'ils ne sont pas à l'échelle.

On précise également que les termes de « longueur » et « latéral » se rapportant à une électrode sont à considérer lorsqu'elle est à plat avant son bobinage.

Les termes de «hauteur » et « latéral » se rapportant au faisceau électrochimique sont à considérer en configuration à la verticale avec ses extrémités latérales respectivement sur le haut et sur le bas.

Les figures 1 à 8 relatives à l'état de l'art ont déjà été commentées en préambule. Elle ne seront donc pas détaillées ci-après.

Pour pouvoir valider l'hypothèse généralement admise que la technologie des batteries tout-solide améliore la sécurité, les inventeurs ont pensé à réaliser un batterie tout-solide à partir d'un accumulateur Li-ion à électrolyte liquide tel que directement utilisé pour des essais abusifs thermiques. Les données permettant de caractériser la sécurité de batteries/accumulateurs suite à l'emballement thermique sont par exemple l'énergie libérée pendant l'emballement, la quantité, le débit et le type de gaz.

### On décrit le procédé de réalisation d'une batterie tout-solide selon l'invention

Etape al: On réalise un accumulateur Li-ion à électrolyte liquide comme décrit en préambule en référence aux figures 4 à 8. On peut aussi ne pas fermer de manière définitive le boitier 6 d'accumulateur une fois le remplissage avec l'électrolyte liquide réalisé. Par exemple, un ruban adhésif étanche à l'air peut être positionné sur le trou de remplissage de l'électrolyte liquide, afin de rendre l'accumulateur étanche.

Etape b/: On charge électriquement l'accumulateur de sorte à ce qu'il atteigne un état de charge électrique prédéterminé, avantageusement de 100%. Aucun emballement thermique n'est possible à cet état de charge. L'électrode négative 3 est ainsi à 100% d'état de charge et l'électrode positive 2 est totalement déchargée.

Etape c/ : On procède au perçage du boitier 6. Par exemple, le ruban adhésif est retiré du trou de remplissage.

Etape d/ : On procède alors à enlèvement de tout l'électrolyte liquide de l'accumulateur sans l'ouvrir et en toute sécurité du fait de la charge électrique préalable. Pour ce faire, on place l'accumulateur dans un sas tiré sous vide et chauffé à 60°C pendant 24 heures. L'électrolyte liquide est donc enlevé par évaporation sous vide sans détériorer les autres composants de l'accumulateur

Etape e/ : On réalisé alors ouverture du boitier 6.

Etape f/ : On sépare alors la cathode 2 chargée à 100%, l'anode 3 et le séparateur 1 les uns des autres.

Etape f1/ (optionnelle) : On nettoie l'anode 3 et la cathode 2 chargée à 100% dans un bain de carbonate de diméthyle (DMC), typiquement pendant une durée de 3 minute pour chacune.

Etape g/ : On dépose par enduction une couche d'encre 14 formant un électrolyte tout-solide, sur le matériau d'insertion 2I de la cathode 2 chargée électriquement à 100%. Les figures 9 et 10 montrent la cathode 2 respectivement avant et après un tel dépôt.

Parmi toutes les méthodes de réalisation d'encre d'électrolyte tout-solide d'enduction connues [4], les inventeurs ont judicieusement pensé à partir de la méthode consistant à mélanger directement au(x) matériau(x) actif(s) d'une électrode positive sous forme d'encre un matériau d'électrolyte tout-solide qui est ensuite puis à enduire ce mélange sur un support collecteur de courant : [5].

Et ils sont partis d'une encre d'électrolyte tout-solide mais qui ne contient aucun matériau actif d'insertion d'ions. La viscosité de l'encre est adaptée en fonction du matériau 2I sur lequel l'encre est déposée.

L'épaisseur d'enduction peut être réglée à 50 µm au-dessus de celle de la cathode 2, afin d'obtenir une épaisseur finale de la couche 14 de 10 à 20 µm.

Avantageusement, l'enduction est réalisée avec une racle fixe tandis que la cathode 2 est tirée à vitesse constante, typiquement de l'ordre de quelques mm/s.

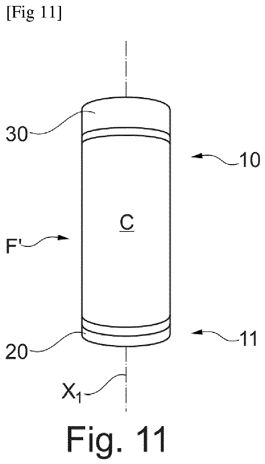

Etape h/ : On réalise alors par bobinage un faisceau électrochimique (F') comportant à partir de la cathode 2 revêtue de la couche d'électrolyte tout-solide déposée selon l'étape g/ et de l'anode 3 séparée préalablement selon l'étape f/ (figure 11).

Etape i/ : On met en place le faisceau électrochimique (F') dans le boitier 6 et on procède comme usuellement avec un accumulateur Li-ion comme décrit précédemment mais, bien entendu sans aucun remplissage par électrolyte liquide.

La batterie tout-solide ainsi obtenue présente une électrochimie active bien que peu performante du fait d'une résistance interne très importante.

On constate que lorsqu'on fait subir à cette batterie tout-solide un essai abusif thermique normalisé avec une rampe de 5 à 20°C/min, elle se comporte en emballement thermique comme une batterie tout-solide réelle, c'est-à-dire réalisée avec les process industriels actuellement prévus.

Ainsi en réassemblant des batteries tout-solide à partir d'accumulateurs Li-ion à électrolyte solide, selon les étapes a/ à i/ précédemment décrites, il est possible d'évaluer la sécurité de n'importe quelle technologie tout-solide avant que son développement ne soit mature.

Avec l'invention, il est donc envisageable lors du développement d'une nouvelle technologie de batterie tout-solide d'optimiser sa sécurité parallèlement à ses performances.

Cette méthode peut s'appliquer à pratiquement toutes les technologies de batteries tout solide. Il suffit de réaliser une encre avec l'électrolyte tout solide et d'en enduire une couche 14 sur la cathode 4. Le matériau de l'encre peut être avantageusement du POE, ou une céramique telle que LLZO, ou un sulfure.

D'autres avantages et améliorations pourront être apportées sans pour autant sortir du cadre de l'invention.

### Liste des références citées :

[1]: Xuning Feng, et al. « Thermal runaway mechanism of lithium-ion battery for electric vehicles: A review», Energy Storage Materials, Volume 10, January 2018, Pages 246-267.
[2]: Wensheng Huang et al. « Questions and Answers Relating to Lithium-Ion Battery Safety Issues», Cell Reports Physical Science, Volume 2, Issue 1, 20 January 2021, 100285.
[3]: Norme RTCA DO-311A « Minimum operational performance Standards for rechargeable Lithium Batteries and battery systems*"*
[4]: Jordi Sastre et al. «Fast Charge Transfer across the Li7La3Zr2012 Solid Electrolyte/LiCoO2 Cathode Interface Enabled by an Interphase-Engineered All-Thin-Film Architecture», ACS Appl. Mater. Interfaces 2020, 12, 36196-36207.
[5]: Zhijie Bia et al. « Interface engineering on cathode side for solid garnet batteries», Chemical Engineering Journal, Volume 387, 1 May 2020, 124089.

## Revendications

1. Procédé de réalisation d'une batterie tout-solide comprenant les étapes suivantes :
a/ réalisation d'un accumulateur électrochimique métal-ion comprenant un faisceau électrochimique (F) comportant au moins une cellule électrochimique (C) constituée d'une cathode (2) et d'une anode (3) de part et d'autre d'un séparateur (4) imprégné d'un électrolyte liquide, la cathode et l'anode comprenant chacune un substrat, formé d'un feuillard métallique qui supporte dans sa portion centrale un matériau actif d'insertion d'ion métal, et un emballage (6) agencé pour contenir le faisceau électrochimique (F) avec étanchéité,
b/ charge électrique de l'accumulateur de sorte à ce qu'il atteigne un état de charge électrique prédéterminé ;
c/ perçage de l'emballage ;
d/ enlèvement de l'électrolyte liquide ;
e/ ouverture de l'emballage ;
f/ séparation de l'anode, cathode et du séparateur les uns des autres ;
g/ dépôt par enduction d'au moins une couche d'encre formant un électrolyte tout-solide, sur l'électrode parmi l'anode ou la cathode, qui est chargée électriquement à l'état prédéterminé;
h/ réalisation d'un faisceau électrochimique (F') comportant au moins une cellule électrochimique (C) constituée de la cathode (2) et de l'anode (3) séparées selon l'étape f/ et dont l'une est revêtue de la couche électrolyte tout-solide déposée selon l'étape g/.

2. Procédé selon la revendication 1, comprenant une étape i/ de mise en place d'un emballage agencé pour contenir le faisceau électrochimique (F') avec étanchéité.

3. Procédé selon la revendication 1 ou 2, les faisceaux électrochimiques (F, F') étant chacun constitué d'une seule cellule électrochimique (C) enroulée sur elle-même par bobinage.

4. Procédé selon 'une des revendication 1 à 3, l'étape d/ étant réalisée par évaporation sous vide.

5. Procédé selon la revendication 4, l'évaporation sous vide étant réalisée à au moins 70°C pendant une durée d'au moins 24 heures.

6. Procédé selon l'une des revendications précédentes, l'étape g/ d'enduction étant réalisée au moyen d'une racle d'enduction fixe au-dessus de l'électrode à enduire tirée à vitesse sensiblement constante.

7. Procédé selon la revendication 6, l'étape g/ d'enduction étant réalisée pour obtenir une épaisseur de la couche d'électrolyte tout-solide sur l'électrode comprise entre 10 et 20µm.

8. Procédé selon l'une des revendications précédentes, comprenant, entre l'étape f/ et l'étape g/, une étape f1/ de nettoyage de l'anode et de la cathode avec du carbonate de diméthyle (DMC).

9. Procédé selon l'une des revendications 2 à 8, les emballages étant des boitiers, les étapes al et i/ comprenant le sertissage d'un couvercle de boitier.

10. Procédé selon l'une des revendications précédentes, le matériau de l'encre formant l'électrolyte tout-solide, déposée selon l'étape g/, étant choisi parmi les polymères, les oxydes et les sulfures ou un mélange de ceux-ci.

11. Procédé selon la revendication 10, le matériau de l'encre étant choisie parmi le poly(oxyéthylène) (POE), une céramique de type Li₇La₃Zr₂O₁₂ (LLZO).

12. Utilisation d'une batterie tout-solide réalisée selon le procédé d'une des revendications précédentes pour réaliser des essais abusifs thermiques.

## Patentansprüche

1. Verfahren zur Herstellung einer Festkörperbatterie, umfassend die folgenden Schritte:
a/ Herstellen eines elektrochemischen Metall-Ionen-Akkumulator, umfassend ein elektrochemisches Bündel (F), das mindestens eine elektrochemische Zelle (C) beinhaltet, die aus einer Kathode (2) und aus einer Anode (3) beidseits eines mit einem flüssigen Elektrolyten imprägnierten Separators (4) besteht, wobei die Kathode und die Anode jeweils ein Substrat umfassen, das aus einem Metallband gebildet ist, das in seinem mittleren Abschnitt ein aktives Metallioneneinlagerungsmaterial trägt, und eine Verpackung (6), die dazu gestaltet ist, das elektrochemische Bündel (F) dicht zu enthalten,
b/ elektrisches Laden des Akkumulators, so dass er einen vorbestimmten elektrischen Ladezustand erreicht;
c/ Durchstechen der Verpackung;
d/ Entfernen des flüssigen Elektrolyten;
e/ Öffnen der Verpackung;
f/ Trennen der Anode, der Kathode und des Separators voneinander;
g/ Aufbringen durch Bestreichen mindestens einer Schicht aus Tinte, die einen Festkörperelektrolyten bildet, auf die Elektrode unter der Anode oder der Kathode, die elektrisch auf den vorbestimmten Zustand geladen ist;
h/ Herstellen eines elektrochemischen Bündels (F'), das mindestens eine elektrochemische Zelle (C) beinhaltet, die aus der Kathode (2) und aus der Anode (3) besteht, die gemäß dem Schritt f/ getrennt sind und von denen die eine mit der gemäß dem Schritt g/ aufgebrachten Festkörperelektrolytschicht beschichtet ist.

2. Verfahren nach Anspruch 1, umfassend einen Schritt i/ des Anordnens einer Verpackung, die dazu gestaltet ist, das elektrochemische Bündel (F') dicht zu enthalten.

3. Verfahren nach Anspruch 1 oder 2, wobei die elektrochemischen Bündel (F, F') jeweils aus einer einzigen elektrochemischen Zelle (C) bestehen, die durch Wickeln aufgerollt ist.

4. Verfahren nach einem der Ansprüche 1 bis 3, wobei der Schritt d/ durch Vakuumverdampfen ausgeführt wird.

5. Verfahren nach Anspruch 4, wobei das Vakuumverdampfen bei mindestens 70 °C während einer Dauer von mindestens 24 Stunden ausgeführt wird.

6. Verfahren nach einem der vorhergehenden Ansprüche, wobei der Schritt g/ des Bestreichens mittels eines Streichrakels ausgeführt wird, der ortsfest oberhalb der zu bestreichenden Elektrode ist, die mit im Wesentlichen konstanter Geschwindigkeit gezogen wird.

7. Verfahren nach Anspruch 6, wobei der Schritt g/ des Bestreichens ausgeführt wird, um eine Dicke der Festkörperelektrolytschicht auf der Elektrode zwischen 10 und 20 µm zu erhalten.

8. Verfahren nach einem der vorhergehenden Ansprüche, umfassend, zwischen dem Schritt f/ und dem Schritt g/, einen Schritt f1/ des Reinigens der Anode und der Kathode mit Dimethylcarbonat (DMC).

9. Verfahren nach einem der Ansprüche 2 bis 8, wobei die Verpackungen Gehäuse sind, wobei die Schritte a/ und i/ das Aufpressen eines Gehäusedeckels umfassen.

10. Verfahren nach einem der vorhergehenden Ansprüche, wobei das Material der den Festkörperelektrolyten bildenden Tinte, die im Schritt g/ aufgebracht wird, unter den Polymeren, den Oxiden und den Sulfiden oder einer Mischung von diesen gewählt ist.

11. Verfahren nach Anspruch 10, wobei das Material der Tinte unter dem Poly(oxyethylen) (POE), einer Keramik vom Typ Li₇La₃Zr₂O₁₂ (LLZO) gewählt ist.

12. Verwendung einer nach dem Verfahren eines der vorhergehenden Ansprüche hergestellten Festkörperbatterie zur Durchführung von thermischen Missbrauchstests.

## Claims

1. Process for producing a solid-state battery, comprising the following steps:
a/ producing a metal-ion electrochemical accumulator comprising a jelly roll (F) comprising at least one electrochemical cell (C) consisting of a cathode (2) and of an anode (3) on either side of a separator (4) impregnated with a liquid electrolyte, the cathode and anode each comprising a substrate, formed from a metal foil that bears in its central segment an active metal-ion insertion material, and packaging (6) arranged to seal-tightly contain the jelly roll (F),
b/ charging the accumulator electrically so that it reaches a predetermined electrical state of charge;
c/ drilling the packaging;
d/ removing the liquid electrolyte;
e/ opening the packaging;
f/ separating the anode, cathode and separator from one another;
g/ depositing using a coating process at least one layer of ink forming a solid-state electrolyte on the electrode among the anode and cathode that was electrically charged to the predetermined state;
h/ producing a jelly roll (F') comprising at least one electrochemical cell (C) consisting of the cathode (2) and anode (3) separated in step f/ and one of which is coated with the solid-state electrolyte layer deposited in step g/.

2. Process according to Claim 1, comprising a step i/ of providing packaging arranged to seal-tightly contain the jelly roll (F').

3. Process according to Claim 1 or 2, the jelly rolls (F, F') each consisting of a single electrochemical cell (C) wound on itself by winding.

4. Process according to one of Claims 1 to 3, step d/ being carried out by vacuum evaporation.

5. Process according to Claim 4, the vacuum evaporation being carried out at least at 70°C for a time of at least 24 hours.

6. Process according to one of the preceding claims, the coating step g/ being carried out by means of a doctor blade fastened above the electrode to be coated, which is pulled at substantially constant speed.

7. Process according to Claim 6, the coating step g/ being carried out so as to obtain a thickness of the solid-state electrolyte layer on the electrode of between 10 and 20 µm.

8. Process according to one of the preceding claims, comprising, between step f/ and step g/, a step f1/ of cleaning the anode and cathode with dimethyl carbonate (DMC) .

9. Process according to one of Claims 2 to 8, the packaging being cans, steps a/ and i/ comprising crimping a can lid.

10. Process according to one of the preceding claims, the material of the ink forming the solid-state electrolyte, deposited in step g/, being chosen from polymers, oxides and sulfides or a mixture thereof.

11. Process according to Claim 10, the material of the ink being chosen from poly(oxyethylene) (POE), and a ceramic such as Li₇La₃Zr₂O₁₂ (LLZO).

12. Use of a solid-state battery produced according to the process of one of the preceding claims to carry out thermal abuse tests.
